# EUROPEAN PATENT APPLICATION

(11) **EP 3 741 216 A1**
(43) Date of publication of application: **25.11.2020**
(21) Application number: 19382395.2
(22) Date of filing: 20.05.2019
(51) Int. Cl.: A23B 4/005, A23L 3/005, A23L 3/02, A23B 4/06, A23B 4/07, A23B 7/005, A23B 7/04, A23B 7/045

(54) **PROCESS FOR THE PREPARATION OF FROZEN AND THAWED READY-TO-EAT PREPARED MEALS**

(71) Applicant: La Sirena Alimentación Congelada S.L.U., 08232 Viladecavalls (ES)
(72) Inventor: PRADOS SOTO, Ismael, 08037 Barcelona (ES)
(74) Representative: Clarke Modet & Co.

(57) **Abstract**

The present invention provides processes for the preparation of frozen and thawed ready-to-eat prepared meals and the corresponding frozen and thawed ready-to-eat prepared meals, which have an improved shelf life under refrigeration once thawed.

## Description

The present invention refers to the field of alimentary products, more precisely to the field of frozen ready-to-eat prepared meals, even more precisely to processes to prepare frozen ready-to-eat prepared meals and to processes to preserve ready-to-eat prepared meals.

In the state of the art of frozen ready-to-eat prepared meals the products, already cooked and yet warm, are packed and cooled straight to freeze. As a principle for the whole category, the products obtained by means of this process are designed to regenerate directly to consumption temperature, so in all cases the shelf life under refrigeration is just 1 day (in the fridge, at a temperature of 4°C). Therefore, the main drawbacks of this process and, hence, of the products obtained therein (ready-to-eat prepared meals) are:
- the short time they can be kept under refrigeration; and
- the tendency of said meals to oxidize which leads to an inappropriate preservation of nutrients and organoleptic properties.

Therefore, as it is readily derivable from what has been explained above, in the state of the art there is still the need for a process for the preparation and preservation of ready-to-eat prepared meals, which allows for their maintenance for long periods of time, both in frozen state as well as once they have been thawed (under refrigeration). This way, a ready-to-eat prepared meal is provided which provides a flexibility in its storage, transport, presentation and usage which is not available nowadays.

The inventors of the present invention, after extensive and exhaustive research, have surprisingly found a process which allows to solve the technical problems present in the state of the art and mentioned above. Therefore, the process of the present invention allows to prepare a frozen ready-to-eat prepared meal which, ones thawed, can still be maintained at least 10 days under refrigeration, more preferably, at least 12 days under refrigeration.

The process of the present invention provides for a cooking and pasteurization step under vacuum conditions (this is, in said step the ready-to-eat prepared meal is maintained under vacuum conditions) which ensures appropriate cooking of the ingredients, elimination of microorganism contamination and superior preservation of nutrients and organoleptic properties and aids in the provision of the above-mentioned conservation (together with a freezing step).

Hence, in a first aspect, the present invention refers to a process for the preparation of frozen ready-to-eat prepared meals.

In a second aspect, the present invention refers to a frozen ready-to-eat prepared meal obtained by means of the process for the preparation of frozen ready-to-eat prepared meals of the present invention.

In a third aspect, the present invention refers to a process for the preparation of a thawed ready-to-eat prepared meal

In a fourth and final aspect, the present invention refers to a thawed ready-to-eat prepared meal prepared in accordance with the process for the preparation of a thawed ready-to-eat prepared meal of the present invention.

As used herein, "ready-to-eat prepared meal" and its plural refer to meal/s intended for direct human consumption without the need for cooking (this is, only needing, if required, thawing and, if desired, heating) and without the need of processing effective to eliminate or reduce to an acceptable level the microorganisms of concern.

Therefore, in a first aspect, as already noted above, the present invention refers to a process for the preparation of a frozen ready-to-eat prepared meal, comprising the following steps:
a) adding all the ingredients in accordance with the alimentary composition of the frozen ready-to-eat prepared meal to be prepared to obtain an ingredient mixture.
b) vacuum sealing the ingredient mixture generated in step a).
c) cooking and pasteurizing simultaneously the vacuum sealed ingredient mixture of step b) to generate a ready-to-eat prepared meal.
d) freezing the ready-to-eat prepared meal obtained in step c) to obtain a frozen ready-to-eat prepared meal.

The process of the present invention provides for the solution to the above-mentioned problem present in the state of the art and for the above-mentioned technical effects.

In the process of the present invention performance of step b) before step c) provides for the fact that the mixture of ingredients is cooked and pasteurized under vacuum which in turn leads to a superior result, both globally and of step c). This is so, because it allows avoiding oxidation of the mixture of ingredients; and it allows an improved retention and maintenance of the colours, appearance and nutritional content. Moreover, these vacuum sealing allows for an improved heat transmission in step c) providing, hence, an improved cooking and pasteurization (less time being required and a superior effect being observed both for the cooking and the pasteurization).

Also, vacuum sealing provides for a decreased formation of water crystals in step d) and, hence, for an improved maintenance and storage of the frozen ready-to-eat prepared meal.

As it is readily derivable from the above, vacuum sealing (and, hence vacuum) generated in step b) is maintained throughout steps c) and d) of the process of the present invention. In addition, vacuum sealing of the frozen ready-to-eat prepared meal obtained in step d) is also maintained all-throughout its storage.

In step a) the added ingredients can be in any form know in the state of the art. Therefore, it is contemplated that none of said ingredients is pre-elaborated (all raw material ingredients), that part of said ingredients is pre-elaborated (and, hence, the rest as raw material ingredients) or that all of said ingredients are pre-elaborated.

In a preferred embodiment, at least part of the ingredients used in step a) are pre-elaborated.

In another preferred embodiment, all ingredients used in step a) are pre-elaborated.

It is contemplated that pre-elaborated ingredients are ingredients processed in accordance with conventional processes or procedures known in the state of the art. Preferably, pre-elaborated ingredients are ingredients which are cooked (for example, boiled or steamed), curated, marinated and/or smoked. More preferably, pre-elaborated ingredients are ingredients which are cooked.

In a preferred embodiment, in the process of the present invention, in step a), the ingredients are placed on a tray. Said tray is of a material acceptable for the food industry, more preferably, said tray is a Crystalized Polyethylene Terephthalate (hereinafter, CPET) tray or a polypropylene ethyl vinyl alcohol (hereinafter, polypropylene EVOH) tray, even more preferably, a polypropylene EVOH tray.

Polypropylene EVOH trays are preferred because they have a temperature working range of -40°C to 120°C, which makes them suitable for both, cooking and preserving (refrigeration and freezing) conditions as well as for their affordable cost. On the other side, CPET trays have a temperature working range of -40°C to 220°C, which makes them also suitable for both, cooking and preserving (refrigeration and freezing) conditions, but they are much more expensive.

Moreover, in case in step a) the ingredients are placed on a tray, preferably, in step b), the tray is vacuum sealed. Preferably, the tray is vacuum sealed by means of a vacuum film sealing step, more preferably, by means of a skin pack film sealing step, which is based on vacuum preservation of food by means of the projection of a thin film layer, hot enough to be modelled in accordance with food's surface and to get sealed to the tray's frame. In the skin pack sealing step, the vacuum, modelling and sealing happen simultaneously.

The use of the skin pack film sealing step is preferred because it improves the outcome of steps c) and d) of the process of the present invention. In addition, skin pack film sealing step is the one that is the most respectful with the appearance and integrity (volume and structure) of the different ingredients within the ready-to-eat prepared meal (frozen or thawed).

As already noted above, step c) is an integrated cooking and pasteurizing process. Step c) is carried out by applying the required temperature and maintaining vacuum, for the required time.

Said step c) is, preferably, carried out by autoclaving, this is, applying the required temperature and counterpressure (to maintain vacuum) simultaneously to ensure cooking and pasteurization of the ready-to-eat prepared meal and to avoid packaging deformation. Therefore, preferably, step c) is carried out in an autoclave.

In a preferred embodiment, step c) comprises several substeps which provide for the required increase of temperature, maintenance thereof and its final decrease while maintaining vacuum. Preferably, step c) comprises the following substeps:
- a first substep of increasing the temperature while maintaining vaccum. Preferably, temperature is increased from ambient temperature to a temperature of between 60°C and 90°C. This first substep, preferably, lasts for between 8 and 10 minutes.
- a second substep in which temperature and vacuum are maintained. In this second substep, the maintained temperature is the temperature reached in the first substep. Therefore, preferably, in this second substep the temperature is between 60°C and 90°C. This second substep preferably lasts for at least 6 minutes, more preferably, between 6 minutes and 2 hours, even more preferably, between 6 minutes and 1 hour and 30 minutes.

In the second substep, it is contemplated to have a target temperature to be achieved at the core of a target ingredient (preferably, the core of the ingredient which is the most difficult to be cooked and pasteurized) so that this substep is extended or lasts until said temperature is reached.
- a third substep of decreasing the temperature while maintaining vacuum. Preferably, temperature is decreased from the temperature of the second substep (preferably, between 60 and 90°C) to a temperature between 40 and 50°C, preferably 45°C. This third substep, preferably, lasts for between 1 and 30 minutes, more preferably, between 1 and 10 minutes, even more preferably, between 4 and 10 minutes, still more preferably, between 4 and 7 minutes.

The features (temperature and time) of all the substeps are selected to ensure an appropriate cooking and pasteurization of the ready-to-eat prepared meal while maintaining the organoleptic properties. For example, the second substep is prolonged for the time required to ensure appropriate elimination of microorganisms while maintaining the organoleptic properties.

Moreover, depending on the temperature in the second substep, the third substep can be prolonged or, even, done in several stages. Preferably, when the temperature in the second substep is 80°C or higher, preferably between 80 and 90°C, more preferably, 87°C; in the third substep:
- a first stage decreasing the temperature to between 65°C and 55^{a}C, preferably 60°C,
- and then a second stage to decrease the temperature to between 40 and 50°C, preferably 45°C,
are carried out. In both stages vacuum is maintained.

Preferably, the above-mentioned temperature increases and decreases are performed linearly or almost linearly. This is, the substep or stage begins with the initial temperature noted therein and by means of linear or almost linear increase or decrease of the temperature, reaches the final temperature noted therein at the end of the substep or stage.

Preferably, the third substep of step c) is carried out using cold water (to decrease the temperature to the desired temperature), even more preferably, by means of cold water projection.

It is noted that the third substep of step c) allows for a fast freezing in step d) of the process of the present invention.

As noted above, step c) is preferably carried out by autoclaving, this is, in an autoclave. In this case, the autoclave is preferably configured appropriately to carry out step c), more preferably, it is configured appropriately to carry out the first to third substeps as explained above. In the most preferred embodiment, the autoclave is configured to carry out:
- a first substep of increasing the temperature while maintaining vacuum. Preferably, temperature is increased from ambient temperature to a temperature of between 60°C and 90°C. Also preferably, to maintain vacuum the autoclave is configured to perform the appropriate counterpressure, more preferably, an increasing counterpressure from 0 millibar (hereinafter, mbar) to between 200 and 300 mbar. This first substep preferably lasts for between 8 and 10 minutes.
- a second substep in which temperature and vacuum are maintained. In this second substep, the maintained temperature is the temperature reached in the first substep. Therefore, preferably, in this second substep the temperature is between 60°C and 90°C. Also preferably, to maintain vacuum the autoclave is configured to perform the appropriate counterpressure, more preferably, an increasing counterpressure from between 200 and 300 mbar (counterpressure at the end of the first substep) to between 300 and 800 mbar. This second substep preferably lasts for at least 6 minutes, more preferably, between 6 minutes and 2 hours, even more preferably, between 6 minutes and 1 hour and 30 minutes. As it will be readily apparent, the counterpressure applied by the autoclave will depend on the temperature and the time said temperature is applied (this is, if a higher temperature is applied for a longer time a higher counterpressure will be required).

In the second substep, it is contemplated to configure the autoclave by means of a target temperature to be achived at the core of a target ingredient (preferably, the core of the ingredient which is the most difficult to be cooked and pasteurized) so that this substep is extended or lasts until said temperature is reached.
- a third substep of decreasing the temperature while maintaining vacuum. Preferably, temperature is decreased from the temperature of the second substep (preferably, between 60°C to 90°C) to a temperature between 40 and 50°C, preferably, 45°C. Also preferably, to maintain vacuum the autoclave is configured to perform the appropriate counterpressure, more preferably, a decreasing counterpressure from between 300 and 800 mbar (counterpressure at the end of the second substep) to 0 mbar. This third substep, preferably, lasts for between 1 and 30 minutes, more preferably, between 1 and 10 minutes, even more preferably, between 5 and 10 minutes, still more preferably, between 4 and 7 minutes.

As noted above, depending on the temperature in the second substep, the third substep can be prolonged or, even, done in several stages. Preferably, when the temperature in the second substep is 80°C or higher, preferably between 80 and 90°C, more preferably, 87°C; in the third substep the autoclave is configured to carry out
- a first stage decreasing the temperature to between 65°C and 55^{a}C, preferably 60°C (while maintaining vacuum). Also preferably, to maintain vacuum the autoclave is configured to perform the appropriate counterpressure, more preferably, a decreasing counterpressure from between 300 and 800 mbar (more preferably, 350 mbar) to between 150 and 250 mbar (more preferably, 200 mbar). In the most preferred embodiment, in this first stage counterpressure in decresed from 350 mbar to 200 mbar.
- And, after the first stage, a second stage decreasing the temperature to between 40 and 50°C, preferably 45°C (while maintaining vacuum). Also preferably, to maintain vacuum the autoclave is configured to perform the appropriate counterpressure, more preferably, a decreasing counterpressure from between 150 and 250 mbar (preferably, 200 mbar) to 0 mbar.

Preferably, the above-mentioned temperature increases and decreases are performed linearly or almost linearly. This is, the substep or stage begins with the initial temperature noted therein and by means of linear or almost linear increase or decrease of the temperature, reaches the final temperature noted therein at the end of the substep or stage.

Also preferably, the above-mentioned counterpressure increases or decreases are performed or applied in a directly proportional manner with regard to the increase or decrease of the temperature (this is, as the temperature increases, the counterpressure increases and as the temperature decreases the counterpressure decreases).

Preferably, the third substep of step c) in the autoclave is carried out using cold water (to decrease the temperature to the desired temperature), even more preferably, by means of cold water projection.

In step c) (and any of the substeps noted above) temperature, pressure and time are selected specially and specifically for each type of ready-to-eat prepared meal, depending on its composition (for example, the type of meat, the type of fish, vegetables, its size, its initial temperature) and its cooking requirements.

In step d), in a preferred embodiment, the freezing is a fast freezing, preferably, performed by means of a fast temperature decrease to -20°C or less in less than two hours, more preferably to -25°C or less in less than two hours, even more preferably to - 25°C in less than two hours.

As noted above, the third substep of step c) provides means to allow a fast freezing in step d) as described above (as temperature is already partially decreased at the end of step c)).

In addition, the fast-freezing in step d), under the conditions explained above, this is, a short freezing time, preferably of less than 2 hours, also aids in obtaining and keeping the appropriate levels of pasteurization of the frozen ready-to-eat prepared meal.

In a preferred embodiment, step d) is carried out using air. This is, the freezing of the ready-to-eat prepared meal (more preferably, fast freezing) is carried out using air.

Preferably, step d) is carried out by means of a fast cooling system.

In a preferred embodiment, the frozen ready-to-eat prepared meal is Turkey Tajine with gluten free cous cous; Ramen; Chicken and ratatouille stew; Chicken barbeque; Beef stew; Beef stew in garam masala; Spanish pot; Catalan pot; Noodles and shrimps wok; Japanese style steamed salmon; Steamed hake, buckwheat and vegetables; Cod confit with almond garlic; Codfish rice; Hake steak ham confited; Salted calamari and eggplant steak; Thai monkfish pot; Whole vegan ramen; Vegan tajine with gluten free cous cous; Vegan stew; or Whole vegan rice stew. More preferably, the frozen ready-to-eat prepared meal is beef stew, codfish rice or Catalan pot.

In the process of the present invention, preferably, the frozen ready-to-eat prepared meal obtained in step d) is stored under freezing conditions while keeping the vacuum sealing (and, hence, vacuum). Preferably, the freezing conditions are -20°C or less, more preferably -21°C. Also preferably, maximum time of storage under freezing conditions is between 12 and 18 months.

Therefore, in the most preferred embodiment, the process for the preparation of a frozen ready-to-eat prepared meal of the present invention comprises the steps of:
a) adding all the ingredients on a tray in accordance with the alimentary composition of the frozen ready-to-eat prepared meal to be prepared to obtain an ingredient mixture. Preferably, the tray is a CPET tray or a polypropylene EVOH tray; most preferably, a polypropylene EVOH tray.
b) vacuum sealing the tray with the ingredient mixture, preferably, the tray is sealed by means of a vacuum film sealing step, even more preferably, by means of a skin pack film sealing step.
c) cooking and pasteurizing simultaneously the sealed ingredient mixture of step b) to generate a ready-to-eat prepared meal, by means of the following substeps:
   - a first substep of increasing the temperature while maintaining vaccum. Preferably, temperature is increased from ambient temperature to a temperature of between 60°C and 90°C. This first substep preferably lasts for between 8 and 10 minutes.
   - a second substep in which temperature and vacuum are maintained. In this second substep, the maintained temperature is the temperature reached in the first substep. Therefore, preferably, in this second substep the temperature is between 60°C and 90°C. This second substep preferably lasts for at least 6 minutes, more preferably, between 6 minutes and 2 hours, even more preferably, between 6 minutes and 1 hour and 30 minutes.
   - a third substep of decreasing the temperature while maintaining vacuum. Preferably temperature is decreased from the temperature of the second substep (preferably, between 60 and 90°C) to a temperature between 40 and 50°C, preferably 45°C. This third substep preferably lasts for between 1 and 30 minutes, more preferably, between 1 and 10 minutes, even more preferably, between 5 and 10 minutes, still more preferably, between 4 and 7 minutes.
d) freezing the ready-to-eat prepared meal obtained in step c) to obtain a frozen ready-to-eat prepared meal, preferably, the freezing is a fast freezing, more preferably, the fast freezing is performed by means of a fast temperature decrease to -20°C or less, preferably to -25°C; in less than two hours.

As noted above, in step c), depending on the temperature in the second substep, the third substep can be prolonged or, even, done in several stages. Preferably, in step c), when the temperature in the second substep is higher than 80°C, preferably between 80 and 90°C, more preferably, 87°C; in the third substep:
- a first stage decreasing the temperature to between 65°C and 55^{a}C, preferably 60°C,
- to afterwards proceed in a second stage to decrease the temperature to between 40 and 50°C, preferably 45°C,
are carried out. In both stages vacuum is maintained.

Preferably, the above-mentioned temperature increases and decreases are performed linearly or almost linearly. This is, the substep or stage begins with the initial temperature and by means of linear or almost linear increase or decrease of the temperature, reaches the final temperature at the end of the substep or stage.

With the process of the present invention, as already noted above, the problems present in the state of the art are solved, allowing to provide a frozen ready-to-eat prepared meal which can be maintained for long periods of time both, in frozen state (until between 12 to 18 months) and, when thawed, under refrigeration (at least 10 days, preferably 12 days, and preferably, at 4°C).

In the state of the art, the frozen ready-to-eat prepared meals, when thawed have to be consumed straightforward. This is, the frozen ready-to-eat prepared meals of the state of the art once thawed they only have one day of shelf life (under refrigeration, this is, at 4°C) and, hence, they can only be warmed (mainly by means of microwave oven) straight from frozen to consumption temperature and consumed.

On its side, the frozen ready-to-eat prepared meals of the present invention, as noted above, can be both, warmed straight from frozen to consumption temperature and consumed; or they can be thawed and kept under refrigeration for long periods of time (at least 10 days, preferably at least 12 days, and preferably, at 4°C; maintaining vacuum sealing, preferably skin pack film sealing). In the latter case, due to the combined action of the steps of the process of the present invention, mainly the combined action of the vacuum sealing step, the cooking and pasteurizing step and the freezing step, the organoleptic and nutritional properties of the ready-to-eat prepared meal are maintained during its maintenance in frozen state, when thawed and still, when maintained under refrigeration after thawing (at least for 10 days, preferably al least for 12 days). In addition, no microbiological contamination is observed within said time-frames.

In a second aspect, the present invention refers to a frozen ready-to-eat prepared meal prepared in accordance with the process for the preparation of a frozen ready-to-eat prepared meal of the present invention.

This frozen ready-to-eat prepared meal of the present invention has the features and technical effects already explained above.

In a preferred embodiment, the frozen ready-to-eat prepared meal is Turkey Tajine with gluten free cous cous; Ramen; Chicken and ratatouille stew; Chicken barbeque; Beef stew; Beef stew in garam masala; Spanish pot; Catalan pot; Noodles and shrimps wok; Japanese style steamed salmon; Steamed hake, buckwheat and vegetables; Cod confit with almond garlic; Codfish rice; Hake steak ham confited; Salted calamari and eggplant steak; Thai monkfish pot; Whole vegan ramen; Vegan tajine with gluten free cous cous; Vegan stew; or Whole vegan rice stew. More preferably, the frozen ready-to-eat prepared meal is beef stew, codfish rice or Catalan pot.

In a third aspect, the present invention refers to a process for the preparation of a thawed ready-to-eat prepared meal, which comprises the above-mentioned steps (of the process for the preparation of a frozen ready-to-eat prepared meal of the present invention) with the addition of the following step after step d):
e) thawing the frozen ready-to-eat prepared meal obtained in step d), to obtain a thawed ready-to-eat prepared meal.

It is contemplated that steps d) and e) are carried out one just after the other without leaving any period of time between them. Alternatively, and preferably, between steps d) and e) a period of time elapses. In the time elapsed between steps d) and e), the frozen ready-to-eat prepared meal is stored under freezing conditions while keeping the vacuum sealing (as explained above). Preferably, the freezing conditions are -20°C or less, more preferably -21°C. Also preferably, the time elapsed between steps d) and e) can be of a maximum of 12 to 18 months.

The thawed ready-to-eat prepared meal obtained in accordance with the process of the present invention, prior to consumption, as it is readily derivable from the above-explanation, keeps the vacuum sealing.

As noted above, the thawed ready-to-eat prepared meal obtained in accordance with the process of the present invention can be maintained under refrigeration (preferably at 4°C) after thawing (at least for 10 days, preferably al least for 12 days).

In a preferred embodiment, the thawed ready-to-eat prepared meal is Turkey Tajine with gluten free cous cous; Ramen; Chicken and ratatouille stew; Chicken barbeque; Beef stew; Beef stew in garam masala; Spanish pot; Catalan pot; Noodles and shrimps wok; Japanese style steamed salmon; Steamed hake, buckwheat and vegetables; Cod confit with almond garlic; Codfish rice; Hake steak ham confited; Salted calamari and eggplant steak; Thai monkfish pot; Whole vegan ramen; Vegan tajine with gluten free cous cous; Vegan stew; or Whole vegan rice stew. More preferably, the thawed ready-to-eat prepared meal is beef stew, codfish rice or Catalan pot.

In a fourth and final aspect, the present invention refers to a thawed ready-to-eat prepared meal prepared in accordance with the process for the preparation of a thawed ready-to-eat prepared meal of the present invention.

In a preferred embodiment, the thawed ready-to-eat prepared meal is Turkey Tajine with gluten free cous cous; Ramen; Chicken and ratatouille stew; Chicken barbeque; Beef stew; Beef stew in garam masala; Spanish pot; Catalan pot; Noodles and shrimps wok; Japanese style steamed salmon; Steamed hake, buckwheat and vegetables; Cod confit with almond garlic; Codfish rice; Hake steak ham confited; Salted calamari and eggplant steak; Thai monkfish pot; Whole vegan ramen; Vegan tajine with gluten free cous cous; Vegan stew; or Whole vegan rice stew. More preferably, the thawed ready-to-eat prepared meal is beef stew, codfish rice or Catalan pot.

As it will be readily understandable by the person skilled in the art, the technical effects explained above for the process for the production of a frozen ready-to-eat prepared meal are directly applicable to the frozen ready-to-eat prepared meal, the process for the production of a thawed ready-to-eat prepared meal and the thawed ready-to-eat prepared meal, all in accordance with the present invention.

To allow a better understanding, the present invention is described in more detail below with reference to the enclosed drawings, which are presented by way of example, and with reference to illustrative and non-limitative examples.

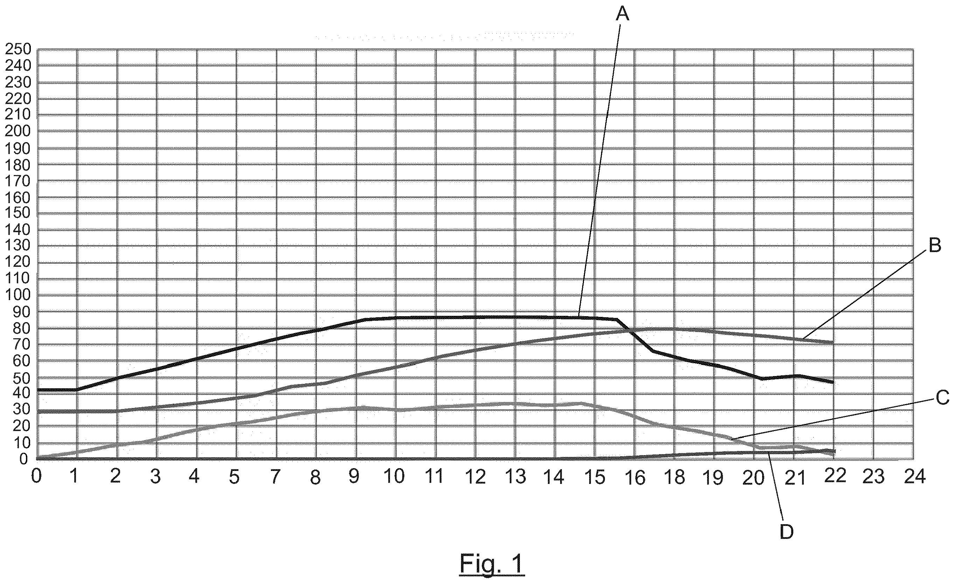

Figure 1 shows the details of temperature and counterpressure in the autoclave; the temperature in the core of the beef; and the predicted pasteurization value of the product (ready-to-eat prepared meal) (mathematical prediction of the pasteurization provided by the autoclave based on the data of temperature and pressure), throughout the cooking and pasteurization step of the beef stew prepared in example 1 in accordance with the process of the present invention. The line marked with an A represents the temperature inside the autoclave; the line marked with a B represents the temperature in the core of the beef; the line marked with a C represents the counterpressure applied by the autoclave (in order to maintain vacuum); and the line marked with a D represents the predicted pasteurization value of the product. In figure 1, the y-axis refers to the temperature in °C (applicable to lines marked with A and B); when multiplied by 10, to the pressure in mbar (applicable to line marked with C); and to the predicted pasteurization value (applicable to line marked with D) (verified by the shelf life results shown in example 1). The x-axis shows the time in minutes (in the cooking and pasteurization step).

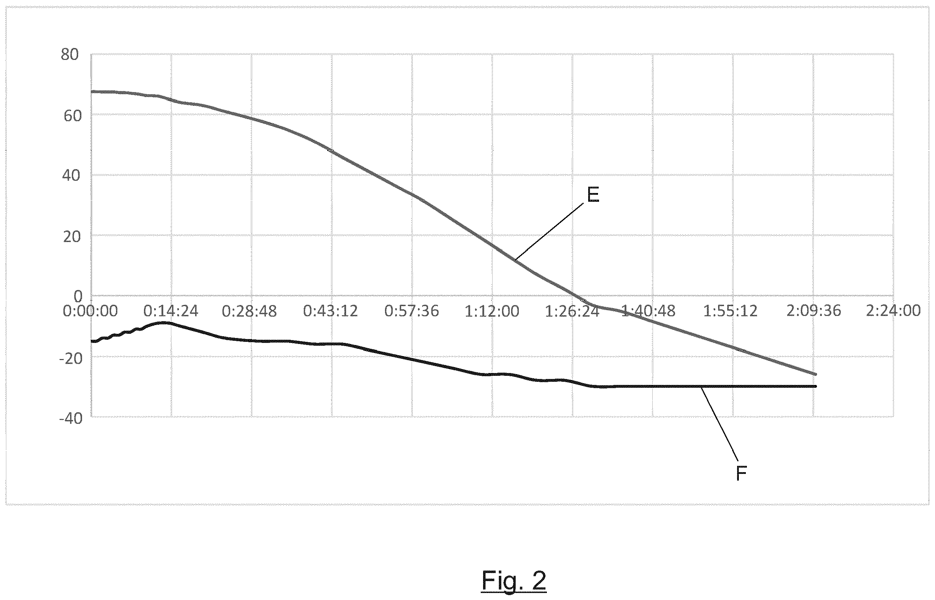

Figure 2 shows the summary of the evolution of the temperature in the freezing step of the beef stew prepared in example 1 in accordance with the process of the present invention. The line marked with an F refers to the temperature inside the cabin of the fast cooling system; and line marked with an E refers to the temperature in the core of the beef. The y-axis refers to the temperature in °C. The x-axis refers to the time (in hours:minutes:seconds) within the freezing step.

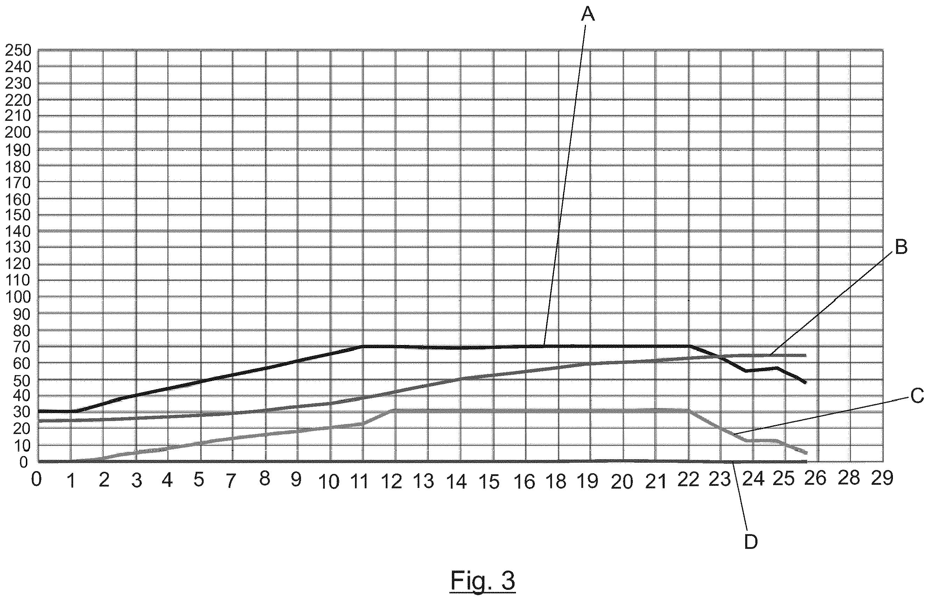

Figure 3 shows the details of temperature and counterpressure in the autoclave; the temperature in the core of the codfish; and the predicted pasteurization value of the product (ready-to-eat prepared meal) (mathematical prediction of the pasteurization provided by the autoclave based on the data of temperature and pressure), throughout the cooking and pasteurization step of the codfish rice prepared in example 2 in accordance with the process of the present invention. The line marked with an A represents the temperature inside the autoclave; the line marked with a B represents the temperature in the core of the codfish; the line marked with C represents the counterpressure applied by the autoclave (in order to maintain vacuum); and the line marked with D represents the predicted pasteurization value of the product. In figure 3, the y-axis refers to the temperature in °C (applicable to lines marked with A and B); when multiplied by 10, to the pressure in mbar (applicable to line marked with C); and to the predicted pasteurization value (applicable to line marked with D) (verified by the shelf life results shown in example 2). The x-axis shows the time in minutes (in the cooking and pasteurization step).

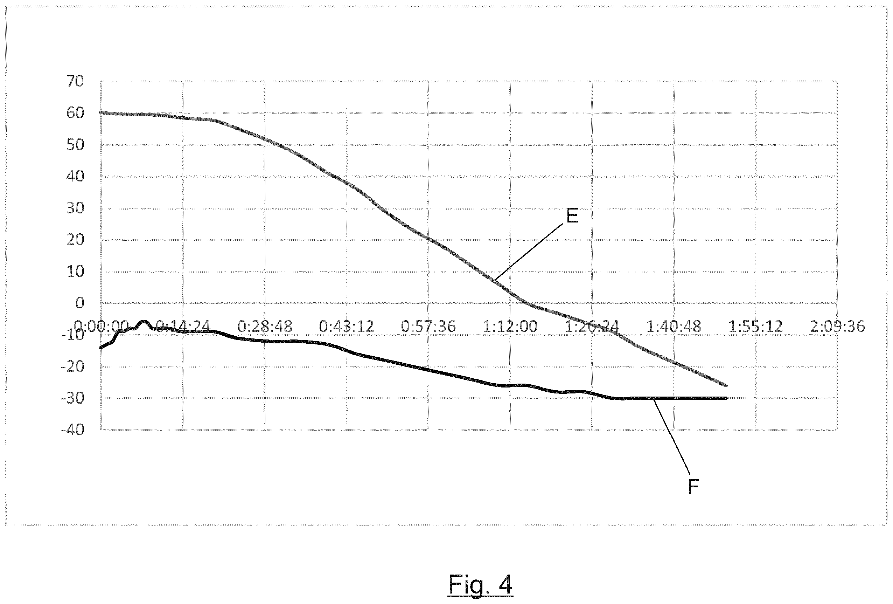

Figure 4 shows the summary of the evolution of the temperature in the freezing step of the codfish rice prepared in example 2 in accordance with the process of the present invention. The line marked with F refers to the temperature inside the cabin of the fast cooling system; and line the line marked with E refers to the temperature in the core of the codfish. The y-axis refers to the temperature in °C. The x-axis refers to the time (in hours:minutes:seconds) within the freezing step.

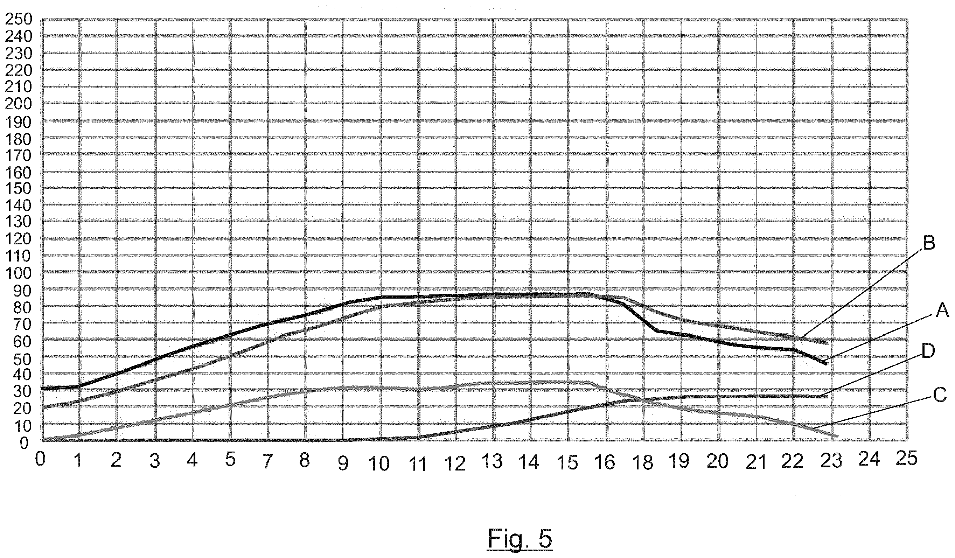

Figure 5 shows the details of temperature and counterpressure in the autoclave; the temperature in the core of a meatball; and the predicted pasteurization value of the product (ready-to-eat prepared meal) (mathematical prediction of the pasteurization provided by the autoclave based on the data of temperature and pressure), throughout the cooking and pasteurization step of the Catalan pot prepared in example 3 in accordance with the process of the present invention. The line marked with an A represents the temperature inside the autoclave; the line marked with a B represents the temperature in the core of a meatball; the line marked with a C represents the counterpressure applied by the autoclave (in order to maintain vacuum); and the line marked with a D represents the predicted pasteurization value of the product. In figure 5, the y-axis refers to the temperature in °C (applicable to lines marked with A and B); when multiplied by 10, to the pressure in mbar (applicable to line marked with C); and to the predicted pasteurization value (applicable to line marked with D) (verified by the shelf life results shown in example 3). The x-axis shows the time in minutes (in the cooking and pasteurization step).

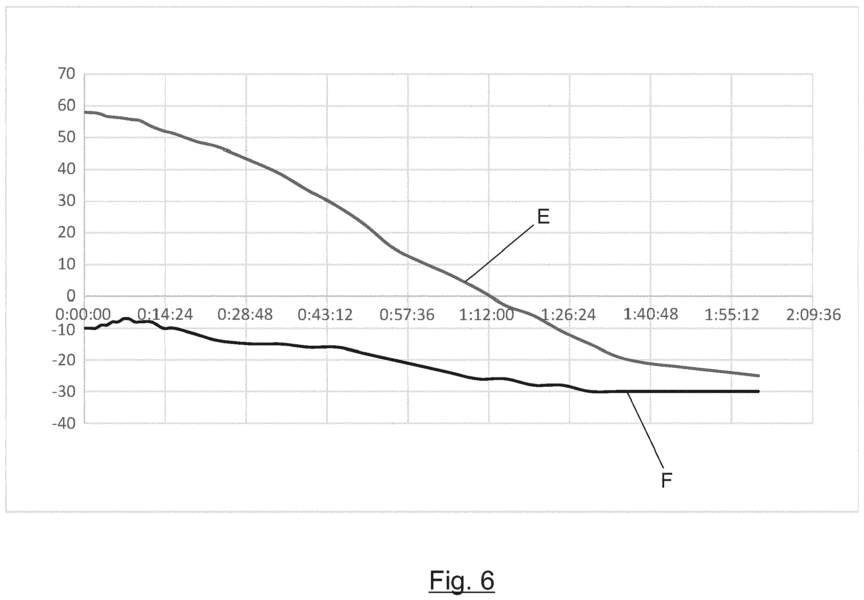

Figure 6 shows the summary of the evolution of the temperature in the freezing step of the Catalan pot prepared in example 3 in accordance with the process of the present invention. The line marked with F refers to the temperature inside the cabin of the fast cooling system; and line marked with E refers to the temperature in the core of a meatball. The y-axis refers to the temperature in °C. The x-axis refers to the time (in hours:minutes:seconds) within the freezing step.

### Examples

### Example 1. Production of Beef Stew by means of a process in accordance with the present invention.

### Process carried out:

### Composition:

All ingredients were placed in the tray before sealing. The beef was cooked previously in the presence of several ingredients as shown in table 1 (in accordance with procedures known in the state of the art).

**Table 1. Ingredients used for initial vacuum cooking of beef (pre-elaboration of beef).**

| **INGREDIENTS** | **INITIAL GROSS WEIGHT (Kg)** | **FINAL NET WEIGHT (Kg)** | **% (in weight/ weight, g/100g)** |
|---|---|---|---|
| Beef | 0.8140 | 0.4830 | 53.194% |
| Sun Dried Tomatoes | 0.0230 | 0.0760 | 8.370% |
| Herbs (Thyme, Rosemary) | 0.0008 | 0.0008 | 0.088% |
| Black Pepper Powder | 0.0008 | 0.0008 | 0.088% |
| Cumin, Powder | 0.0002 | 0.0002 | 0.022% |
| Seawater (Marevendis Agua de Mar, Alicante, Spain) | 0.1150 | 0.1150 | 12.665% |
| Outcoming Cooking Juices | 0.0000 | 0.2322 | 25.573% |

- The needed time for an optimal texture of beef is longer that the time needed for the cooking and pasteurizing step in the process of the present invention. Therefore, this process is advanced in order to get the best texture and flavour in the beef.
- The pre-elaborated beef, previously portioned, and the juices precipitated during the vacuum cooking process as a broth, proceeded to the process of the present invention.

Then:
- all the ingredients in accordance with table 2 were added on polypropylene EVOH trays (FAERCH mod. B6 p1825sw-25 PP/EVOH/PE);

**Table 2. Composition of each of the trays in example 1. Steamed refers to cooked in steam oven for 5 minutes at 100°C with 100% steam.**

| **INGREDIENTS** | **NET FINAL (Kg)** | **TOTAL % (in weight/ weight, g/100g)** |
|---|---|---|
| Baby Potatoes (Steamed) | 0.1200 | 29.4% |
| Beef (Vacuum Cooked) (see table 1) | 0.1000 | 24.5% |
| Outcoming Cooking Juices | 0.0600 | 14.7% |
| Cherry Tomatoes (Fresh) | 0.0600 | 14.7% |
| Carrot Cubes (Steamed) | 0.0500 | 12.3% |
| Black Olives | 0.0180 | 4.4% |

- The trays were vacuum sealed with appropriate film (ITP CLEARPACK FOOD BSKTB) by means of a skin pack heat and vacuum sealer (ILPRA FP SPEEDY SKIN 2017).
- Cooking and pasteurization step: As noted above all ingredients had been cooked previously except cherry tomatoes and black olives. Therefore, the target ingredient to be cooked during the process were carrot cubes (0,5x0,5 cm). Hence, the optimal temperature was selected at 80°C, with a good pasteurizing potential. As a result, the trays were positioned in an autoclave (ILPRA PLUS 125 DUO) and the autoclave program setting selected for this step was that shown in table 3.

**Table 3. autoclave program setting selected for the step of cooking and pasteurization for beef stew in example 1.**

| **PROGRAMMED TIME (min)** | **CABIN TEMPERATURE (°C)** | **COUNTERPRESSURE APPLIED BY THE AUTOCLAVE (mbar)** |
|---|---|---|
| 8 | Increase from ambient temperature to 87°C | Increase from 0 mbar to 300 mbar |
| 6 | Maintaining 87°C | Increase from 300 mbar to 350 mbar |
| 3 | Decrease from 87°C to 60°C | Decrease from 350 mbar to 200 mbar |
| 4 | Decrease from 60 °C to 45°C | Decrease from 200 mbar to 0 mbar. |

Figure 1 shows the details of temperature and counterpressure in the autoclave; of temperature in the core of the beef; and of the predicted pasteurization value of the beef stew, throughout the cooking and pasteurization step in accordance with what has been noted above. As it can be derived from figure 1, the increases and decreases of temperature mentioned in table 3 were linear or almost linear. In addition, the increases and decreases of counterpressure were directly proportional to the temperature applied and the time said temperature was applied.

As it can be appreciated from said figure 1 the samples were in expected cooking and pasteurization ratio for the required temperature and time.
- Afterwards, the samples were frozen by means of fast freezing. More precisely, samples were frozen at -25 °C in less than 2 hours. To that end, samples were removed from the autoclave and placed immediately at the fast cooling system (ACFRI RS 15, equipped with temperature probe for cabin and product). The probe was placed at the same location in the product (core of the beef) as in the autoclave to get report of the last point that reached the target temperature (-25°C). Figure 2 shows a summary of the evolution of the temperature in this fast freezing step, both in the fast cooling system and in the core of the beef.

Afterwards, in order to reproduce the normal procedure in the field of frozen foods, the samples were stored in a frozen warehouse for more than 90 days at -21°C. After that time, said samples were delivered to the laboratory to start shelf life studies once thawed.

### Shelf life analysis:

- 3 samples of beef stew were prepared in accordance with the above process to cover the shelf life analytics requirement with the main objective of determining a secure shelf life in refrigeration after the beef stew had been kept frozen for a long time (more than 90 days at -21°C). The procedure applied was:
- Day 0. The 3 samples were thawed and kept refrigerated at 4°C. Analysis of Sample 1 day 0 was performed to assure the alimentary security of the samples just after thawing. Results obtained were positive demonstrating microbiological security of the ready-to-eat prepared meal in this time point.
- Day 6. Analysis of sample 2 after 6 days of maintenance of the samples under refrigeration (4°C) to determinate the evolution of the common markers; microbiological, moulds, yeasts and alimentary security. Results obtained were positive demonstrating microbiological security of the ready-to-eat prepared meal in this time point.
- Day 12. Analysis of sample 3 after 12 days of maintenance of the samples under refrigeration (4°C) to determinate the evolution of the common markers; microbiological, moulds, yeasts, alimentary security. Results obtained appear summarized in table 4.

**Table 4. Results obtained for the microbiological analysis of beef stew of example 1 obtained in accordance with a process of the present invention after thawing and keeping the meal for 12 days under refrigeration (4°C). CFU: colony forming unit.**

| **Determination** | **Result** |
|---|---|
| Microorganism recount at 30°C. Plate detection and counting of aerobic microorganisms at 30 °C (UNE-EN ISO 4833-1:2014). | 9.0×10¹ (CFU/g) |
| Recount coliforms at 37°C. Plate detection and counting of total coliforms (ISO 4832:2006). | < 10 CFU/g |
| Investigation of *Escherichia coli* (method based in ISO 16649). | Absence in 1 g |
| Investigation of *Salmonella* spp. | Absence in 25 g |
| Recount *Staphylococcus* coagulase positive at 37 °C. Plate detection and counting of staphylococcus coagulase positive (ISO 6888-2:1999/A1:2003). | < 10 CFU/g |
| Investigation of *Listeria monocytogenes* and *Listeria* spp. | Absence in 25 g |
| Recount *Lactobacillus* (method based in ISO 15214). | < 10 CFU/g |
| Recount Moulds (method based in ISO 21527). | < 50 CFU/g |
| Recount yeasts (method based in ISO 21527). | < 50 CFU/g |

These results on microbiological criterion for ready-to-eat foods are in whole compliance with microbiological criteria described at the European Commission regulation (EU) No 2073/2005 of 15^{th} November 2005 on microbiological criteria for foodstuffs, and its latest amending regulation (EC) 2019/229 of February 2019.

### Nutritional analysis:

Samples of beef stew were prepared in accordance with the above process and kept frozen for a long time (more than 90 days at -21°C). Afterwards samples were thawed and kept under refrigeration (4°C). Samples were analysed for their nutritional content at days 0 (just after thawing the sample) and 12 after thawing (keeping the beef stew at 4°C after thawing).

Results obtained appear summarized in table 5.

**Table 5. Results obtained for the nutritional content of beef stew of example 1 obtained in accordance with a process of the present invention 0 and 12 days after thawing (keeping the beef stew at 4°C after thawing). All % noted within table 5, except humidity, refer to: quantity of the determined value with regard to the total quantity of the product; or in the case of the analysed fatty acids (and sums thereof) to the quantity of the determined value with regard to the total quantity of fats in the product.**

| **Determined value** | **Day 0** | **Day 12** |
|---|---|---|
| Humidity (Humidity or the quantity of water is calculated subjecting the product to oven drying at 103°C for a determined time depending on the product (from 3 to 6h) and weighing the product before and after. The water content of the sample is calculated by weight difference and is expressed as humidity % (g of water / 100 g of sample)) | 79.23% | 77.53% |
| Crude protein (N x 6.25, crude protein is calculated by multiplying total nitrogen (analyzed) by 6.25) | 10.82% | 14.19% |
| Fat (analysed by means of hydrolysis) | 1.98% | 2.17% |
| Carbohydrates | 6.71% | 4.97% |
| Total ashes (obtained subjecting the product to a temperature of 550°C) | 1.26% | 1.14% |
| Energy | 88 kcal/100g | 96 kcal/100g |
| Energy | 371 kJ/100g | 406 kJ/100g |
| Total sugars (glucose) | 1.47% | 2.10% |
| Salt (NaCI) | 0.50% | 0.50% |
| pH | 5.44 | 5.64 |
| Water activity (Aw) | 0.934 | 0.939 |
| C(4:0) Butyric | <0.01% | <0.01% |
| C(6:0) Caproic | <0.01% | <0.01% |
| C(8:0) Caprylic | <0.01% | <0.01% |
| C(10:0) Capric | <0.01% | <0.01% |
| C(12:0) Lauric | <0.01% | <0.01% |
| C(12:1) Lauroleic | <0.01% | <0.01% |
| C(14:0) Myristic | 2.51% | 2.33% |
| C(14:1) Myristoleic | 0.75% | 0.41% |
| C(15:0) Pentadecanoic | <0.01% | 0.34% |
| C(16:0) Palmitic | 25.04% | 24.16% |
| C(16:1) Palmitoleic | 3.67% | 3.46% |
| C(17:0) Margaric | 0.84% | 1.07% |
| C(16:2) Hexadecadienoic | <0.01% | <0.01% |
| C(17:1) Margaroleic | 0.75% | 0.99% |
| C(18:0) Stearic | 14.52% | 13.07% |
| C(18:1) Oleic | 37.77% | 42.69% |
| C(18:2) Linoleic | 11.9% | 9.69% |
| C(18:3) Linolenic | 0.35% | 0.87% |
| C(20:0) Arachidic | <0.01% | 0.26% |
| C(20:1) Gadoleic | <0.01% | <0.01 % |
| C(20:2) Eicosadienoic | 1.81% | 0.66% |
| C(20:4) Arachidonic | <0.01% | <0.01% |
| C(20:5) Eicosapentanoic (EPA) | <0.01% | <0.01% |
| C(22) Behenic | <0.01% | <0.01% |
| C(22) Sum of the unsaturated C22 | <0.01% | <0.01% |
| C(22:5) Docosapentanoic (DPA) | <0.01% | <0.01% |
| C(22:6) Docosahexanoic (DHA) | <0.01% | <0.01% |
| C(24) Lignoceric | <0.01% | <0.01% |
| C(24) Sum of unsaturated C24 | <0.01% | <0.01% |
| Sum of saturated fatty acids | 42.91% | 41.23% |
| Sum of monounsaturated fatty acids | 42.94% | 47.55% |
| Sum of polyunsaturated fatty acids | 14.15% | 11.22% |

As can be directly derived from the results shown in table 5, there was no significant difference between the nutritional content results obtained at days 0 and 12 after thawing and all the values obtained were acceptable.

### Organoleptic analysis:

Samples of beef stew were prepared in accordance with the above process and kept frozen for a long time (more than 90 days at -21°C). Afterwards samples were thawed and kept under refrigeration (4°C). Samples were analysed for their organoleptic features at days 0 (just after thawing the sample) and 12 after thawing (keeping the beef stew at 4°C after thawing) by a tasting panel of 6 members. Results were satisfactory both for day 0 and for day 12 after thawing. In addition, no significant difference was seen in the organoleptic features between day 0 and day 12 after thawing.

The results included in tables 4 and 5, as well as the organoleptic analysis, show that the frozen ready-to-eat prepared meals obtained in accordance with the present invention (as exemplified in this example by means of beef stew), are able to be kept long periods of time in frozen conditions (more than 90 days at -21 °C) and afterwards, also long periods of time under refrigeration after thawing, at least 12 days, and even, more than 12 days, without microbiological contamination and without affecting the nutritional content and organoleptic features of the ready-to-eat prepared meal. These results are surprisingly better than those obtained with the frozen ready-to-eat prepared meals known or available in the state of the art which, once thawed, as already explained above, can only be kept 1 day under refrigeration.

### Example 2. Production of Codfish Rice by means of a process in accordance with the present invention.

### Process carried out:

### Composition:

Ingredients were placed in the tray before sealing. The rice and the beans were cooked (cooked in an appropriate mixture of tap water and seawater (Marevendis Agua de Mar, Alicante, Spain) for 25 minutes, and steam oven in combined function of baking and steam for 25 minutes) previously in the presence of several ingredients as shown in table 6:

**Table 6. Ingredients used for initial cooking of rice and beans (pre-elaboration of rice and beans).**

| **INGREDIENTS** | **INITIAL GROSS WEIGHT (Kg)** | **% (in weight/ weight, g/100g)** |
|---|---|---|
| Parboiled Rice | 1 | 23.73 % |
| Seawater (Marevendis Agua de Mar, Alicante, Spain) | 0.9 | 21.36 % |
| Tap Water | 0.8 | 18.98 % |
| Herbs (Thyme, Rosemary, Laurel) | 0.006 | 0.14 % |
| Oregano | 0.003 | 0.07 % |
| Red Beans (Cooked) | 1.505 | 35.71 % |

- The pre-elaborated rice and beans (cooked), proceeded to the process of the present invention.

Then:
- all the ingredients in accordance with table 7 were added on polypropylene EVOH trays (FAERCH mod. B6 p1825sw-25 PP/EVOH/PE);

**Table 7. Composition of each of the trays in example 2. Steamed refers to cooked in steam oven for 4 minutes at 95°C with 100% water steam.**

| **INGREDIENTS** | **NET FINAL (Kg)** | **TOTAL % (in weight/ weight, g/100g)** |
|---|---|---|
| Steamed Rice and Beans (see table 6) | 0.11 | 25.58 % |
| Deboned Codfish (Frozen) | 0.13 | 30.23 % |
| Cauliflower Sprouts, Steamed | 0.12 | 27.91 % |
| Carrot Cubes, Steamed | 0.05 | 11.63 % |
| Olive Oil | 0.02 | 4.65 % |

- The trays were vacuum sealed with appropriate film (ITP CLEARPACK FOOD BSKTB) by means of a skin pack heat and vacuum sealer (ILPRA FP SPEEDY SKIN 2017).
- Cooking and pasteurization step: As noted above all ingredients had been cooked previously except codfish. Hence, the optimal temperature was selected at 64°C, with a good pasteurizing potential. As a result, the trays were positioned in an autoclave (ILPRA PLUS 125 DUO) and the autoclave program setting selected for this step was that shown in table 8. The codfish was portioned frozen in order to apply the maximum time to get in the centre at 64°C.

**Table 8. autoclave program setting selected for the step of cooking and pasteurization for codfish rice in example 2. NA: not applicable**

| **PROGRAMMED TIME (min)** | **CABIN TEMPERATURE (°C)** | **COUNTERPRESSURE APPLIED BY THE AUTOCLAVE (mbar)** | **TARGET TEMPERATURE PROBE CORE PRODUCT (°C)** |
|---|---|---|---|
| 10 | Increase from ambient temperature to 70°C | Increase from 0 mbar to 200 mbar | NA |
| 11 | Maintaining 70°C | Increase from 200 mbar to 300 mbar | 64°C. This substep was settled to last until the core of the product reached 64°C |
| 4 | Decrease from 70°C to 45°C | Decrease from 200 mbar to 0 mbar | NA |

Figure 3 shows the details of temperature and counterpressure in the autoclave; the temperature in the core of the codfish; and the predicted pasteurization value of the codfish rice, throughout the cooking and pasteurization step in accordance with what has been noted above. As it can be derived from figure 3, the increases and decreases of temperature mentioned in table 8 were linear or almost linear. In addition, the increases and decreases of counterpressure were directly proportional to the temperature applied and the time said temperature was applied.

As it can be appreciated from said figure the samples were in expected cooking and pasteurization ratio for the required temperature and time.
- Afterwards, the samples were frozen by means of fast freezing. More precisely, samples were frozen at -25 °C in less than 2 hours. To that end, samples were removed from the autoclave and placed immediately at the fast cooling system (ACFRI RS 15, equipped with temperature probe for cabin and product). The probe was placed in the product at the same location as in the autoclave to get report of the last point that reached the target temperature (-25°C). Figure 4 shows a summary of the evolution of the temperature in this fast freezing step, both in the fast cooling system and in the core of the codfish.

Afterwards, in order to reproduce the normal procedure in the field of frozen foods, the samples were stored in a frozen warehouse for more than 90 days at -21°C. After that time, said samples were delivered to the laboratory to start shelf life studies once thawed.

### Shelf life analysis:

- 3 samples of codfish rice were prepared in accordance with the above process to cover the shelf life analytics requirement with the main objective of determining a secure shelf life in refrigeration after the codfish rice had been kept frozen for a long time (more than 90 days at -21°C). The procedure applied was:
- Day 0. The 3 samples were thawed and kept refrigerated at 4°C. Analysis of Sample 1 day 0 was performed to assure the alimentary security of the samples just after thawing. Results obtained were positive demonstrating microbiological security of the ready-to-eat prepared meal in this time point.
- Day 6. Analysis of sample 2 after 6 days of maintenance of the samples under refrigeration (4°C) to determinate the evolution of the common markers; microbiological, moulds, yeasts and alimentary security. Results obtained were positive demonstrating microbiological security of the ready-to-eat prepared meal in this time point.
- Day 12. Analysis of sample 3 after 12 days of maintenance of the samples under refrigeration (4°C) to determinate the evolution of the common markers; microbiological, moulds, yeasts, alimentary security. Results obtained appear summarized in table 9.

**Table 9. Results obtained for the microbiological analysis of codfish rice of example 2 obtained in accordance with a process of the present invention after thawing and keeping the meal for 12 days under refrigeration (4°C). CFU: colony forming unit.**

| **Determination** | **Result** |
|---|---|
| Microorganism recount at 30°C. Plate detection and counting of aerobic microorganisms at 30 °C (UNE-EN ISO 4833-1:2014). | 3.8×10² (CFU/g) |
| Recount coliforms at 37°C. Plate detection and counting of total coliforms (ISO 4832:2006). | < 10 CFU/g |
| Investigation of *Escherichia coli* (method based in ISO 16649). | Absence in 1 g |
| Investigation of *Salmonella* spp | Absence in 25 g |
| Recount *Staphylococcus* coagulase positive at 37 °C. Plate detection and counting of staphylococcus coagulase positive (ISO 6888-2:1999/A1:2003). | < 10 CFU/g |
| Investigation of *Listeria monocytogenes* and *Listeria spp.* | Absence in 25 g |
| Recount *Lactobacillus* (method based in ISO 15214). | < 10 CFU/g |

These results on microbiological criterion for ready-to-eat foods are in whole compliance with microbiological criteria described at the European Commission regulation (EU) No 2073/2005 of 15^{th} November 2005 on microbiological criteria for foodstuffs, and its latest amending regulation (EC) 2019/229 of February 2019.

### Nutritional analysis:

Samples of codfish rice were prepared in accordance with the above process and kept frozen for a long time (more than 90 days at -21°C). Afterwards samples were thawed and kept under refrigeration (4°C). Samples were analysed for their nutritional content at days 0 (just after thawing the sample) and 12 after thawing (keeping the codfish rice at 4°C after thawing).

Results obtained appear summarized in table 10.

**Table 10. Results obtained for the nutritional content of codfish rice of example 2 obtained in accordance with a process of the present invention 0 and 12 days after thawing (keeping the codfish rice at 4°C after thawing). All % noted within table 10, except humidity, refer to: quantity of the determined value with regard to the total quantity of the product; or in the case of the analysed fatty acids (and sums thereof) to the quantity of the determined value with regard to the total quantity of fats in the product.**

| **Determined value** | **Day 0** | **Day 12** |
|---|---|---|
| Humidity (Humidity or the quantity of water is calculated subjecting the product to oven drying at 103°C for a determined time depending on the product (from 3 to 6h) and weighing the product before and after. The water content of the sample is calculated by weight difference and is expressed as humidity % (g of water / 100 g of sample)) | 77.08% | 78.83% |
| Crude protein (N x 6.25, crude protein is calculated by multiplying total nitrogen (analyzed) by 6.25) | 5.40% | 6.89% |
| Fat (analysed by means of hydrolysis) | 1.18% | 1.38% |
| Carbohydrates | 15.29% | 11.28% |
| Total ashes (obtained subjecting the product to a temperature of 550°C) | 1.05% | 1.62% |
| Energy | 93 kcal/100g | 85 kcal/100g |
| Energy | 395 kJ/100g | 360 kJ/100g |
| Total sugars (glucose) | 0.31% | 0.65% |
| Salt (NaCI) | 0.64% | 1.06% |
| pH | 6.40 | 6.69 |
| Water activity (Aw) | 0.946 | 0.930 |
| C(4:0) Butyric | <0.01% | <0.01% |
| C(6:0) Caproic | <0.01% | <0.01% |
| C(8:0) Caprylic | <0.01% | <0.01% |
| C(10:0) Capric | <0.01% | <0.01% |
| C(12:0) Lauric | <0.01% | <0.01% |
| C(12:1) Lauroleic | <0.01% | <0.01% |
| C(14:0) Myristic | <0.01% | <0.01% |
| C(14:1) Myristoleic | <0.01% | <0.01% |
| C(15:0) Pentadecanoic | <0.01% | <0.01% |
| C(16:0) Palmitic | 18.26% | 16.74% |
| C(16:1) Palmitoleic | 0.87% | 1.34% |
| C(17:0) Margaric | <0.01% | <0.01% |
| C(16:2) Hexadecadienoic | <0.01% | <0.01% |
| C(17:1) Margaroleic | <0.01% | <0.01% |
| C(18:0) Stearic | 3.96% | 5.09% |
| C(18:1) Oleic | 50.32% | 52.43% |
| C(18:2) Linoleic | 23.91% | 20.69% |
| C(18:3) Linolenic | <0.01% | 1.00% |
| C(20:0) Arachidic | <0.01% | <0.01% |
| C(20:1) Gadoleic | <0.01% | <0.01% |
| C(20:2) Eicosadienoic | <0.01% | <0.01% |
| C(20:4) Arachidonic | <0.01% | <0.01% |
| C(20:5) Eicosapentanoic (EPA) | <0.01% | <0.01% |
| C(22) Behenic | <0.01% | <0.01% |
| C(22) Sum of the unsaturated C22 | <0.01% | <0.01% |
| C(22:5) Docosapentanoic (DPA) | 0.91% | 1.03% |
| C(22:6) Docosahexanoic (DHA) | 1.77% | 1.68% |
| C(24) Lignoceric | <0.01% | <0.01% |
| C(24) Sum of unsaturated C24 | <0.01% | <0.01% |
| Sum of saturated fatty acids | 22.22% | 21.83% |
| Sum of monounsaturated fatty acids | 51.19% | 53.77% |
| Sum of polyunsaturated fatty acids | 26.59% | 24.40% |

As can be directly derived from the results shown in table 10, there was no significant difference between the nutritional content results obtained at days 0 and 12 after thawing and all the values obtained were acceptable.

### Organoleptic analysis:

Samples of codfish rice were prepared in accordance with the above process and kept frozen for a long time (more than 90 days at -21°C). Afterwards samples were thawed and kept under refrigeration (4°C). Samples were analysed for their organoleptic features at days 0 (just after thawing the sample) and 12 after thawing (keeping the codfish rice at 4°C after thawing) by a tasting panel of 6 members. Results were satisfactory both for day 0 and for day 12 after thawing. In addition, no significant difference was seen in the organoleptic features between day 0 and day 12 after thawing.

The results included in tables 9 and 10 and in the organoleptic analysis show that the frozen ready-to-eat prepared meals obtained in accordance with the present invention (as exemplified in this example by means of codfish rice), are able to be kept long periods of time in frozen conditions (more than 90 days at -21°C) and afterwards, also long periods of time under refrigeration after thawing, at least 12 days, and even, more than 12 days, without microbiological contamination and without affecting the nutritional content and organoleptic features of the ready-to-eat prepared meal. These results are surprisingly better than those obtained with the frozen ready-to-eat prepared meals known or available in the state of the art which, once thawed, as already explained above, can only be kept 1 day under refrigeration.

### Example 3. Production of Catalan Pot by means of a process in accordance with the present invention.

### Process carried out:

### Composition:

Ingredients were placed in the tray before sealing. The chickpeas and vegetable broth were cooked previously. For said cooking:
For the chickpeas: first, said chickpeas were soaked 10 hours in tap water (1 % salt, % in weight/weight, this is g/100g) and then boiled at 95°C for 57 minutes.

For the vegetable broth: Mixture of celeriac, carrot, onion and turnip was boiled for 2 hours in a regular pot (25% (weight/weight, g/100 g) vegetables + 75% (weight/weight, g/100 g) water).
- The pre-elaborated chickpeas and vegetable broth (cooked), proceeded to the process of the present invention.

Then:
- all the ingredients in accordance with table 11 were added on polypropylene EVOH trays (FAERCH mod. B6 p1825sw-25 PP/EVOH/PE);

**Table 11. Composition of each of the trays in example 3.**

| **INGREDIENTS** | **NET FINAL (Kg)** | **TOTAL % (in weight/ weight, g/100g)** |
|---|---|---|
| Veal Meatballs (frozen) 20g each | 0.06 | 15.79 % |
| Chicken Poultry, Sliced | 0.04 | 10.53 % |
| Cabagge, Sliced | 0.05 | 13.16 % |
| Carrot, Chopped | 0.05 | 13.16 % |
| Noodles (Hard Grain) | 0.04 | 10.53 % |
| Vegetable Broth | 0.03 | 7.89 % |
| Chickpeas, Cooked | 0.02 | 5.26 % |
| Seawater (Marevendis Agua de Mar, Alicante, Spain) | 0.06 | 15.79 % |
| Potato Cubes | 0.03 | 7.89 % |

- The trays were vacuum sealed with appropriate film (ITP CLEARPACK FOOD BSKTB) by means of a skin pack heat and vacuum sealer (ILPRA FP SPEEDY SKIN 2017).
- Cooking and pasteurization step: The optimal temperature for meats and vegetables was 85°C and to get noodles cooked a combination of optimal temperature of 85-90°C with necessary liquid volume (mixture of broth and seawater (Marevendis Agua de Mar, Alicante, Spain)) added to the precipitation of juices from other ingredients, were required. As a result of the above requirements, the trays were positioned in an autoclave (ILPRA PLUS 125 DUO) and the autoclave program setting selected for this step was that shown in table 12.

**Table 12. autoclave program setting selected for the step of cooking and pasteurization for Catalan pot of example 3.**

| **PROGRAMMED TIME (min)** | **CABIN TEMPERATURE (°C)** | **COUNTERPRESSURE APPLIED BY THE AUTOCLAVE (mbar)** |
|---|---|---|
| 8 | Increase from ambient temperature to 87°C | Increase from 0 mbar to 300 mbar |
| 6 | Maintaining 87°C | Increase from 300 mbar 350 mbar |
| 3 | Decrease from 87°C to 60°C | Decrease from 350 mbar to 200 mbar |
| 4 | Decrease from 60°C 45°C | Decrease from 200 mbar to 0 mbar |

Figure 5 shows the details of temperature and counterpressure in the autoclave; the temperature in the core of a meatball; and the predicted pasteurization value of the Catalan pot, throughout the cooking and pasteurization step in accordance with what has been noted above (the probe for the core of the product reports the internal temperature of one meatball, the thickest point to nail the probe). As it can be derived from figure 5, the increases and decreases of temperature mentioned in table 12 were linear or almost linear. In addition, the increases and decreases of counterpressure were directly proportional to the temperature applied and the time said temperature was applied.

As it can be appreciated from said figure 5 the samples were in expected cooking and pasteurization ratio for the required temperature and time.
- Afterwards, the samples were frozen by means of fast freezing. More precisely, samples were frozen at -25 °C in less than 2 hours. To that end, samples were removed from the autoclave and placed immediately at the fast cooling system (ACFRI RS 15, equipped with temperature probe for cabin and product). The probe was placed in the product at the same location as in the autoclave to get report of the last point that reached the target temperature (-25°C). Figure 6 shows a summary of the evolution of the temperature in this fast freezing step, both in the fast cooling system and in the core of the product.

Afterwards, in order to reproduce the normal procedure in the field of frozen foods, the samples were stored in a frozen warehouse for more than 90 days at -21°C. After that time, said samples were delivered to the laboratory to start shelf life studies once thawed.

### Shelf life analysis:

- 3 samples of Catalan pot were prepared in accordance with the above process to cover the shelf life analytics requirement with the main objective of determining a secure shelf life in refrigeration after the Catalan pot had been kept frozen for a long time (90 days at -21°C). The procedure applied was:
- Day 0. The 3 samples were thawed and kept refrigerated at 4°C. Analysis of Sample 1 day 0 was performed to assure the alimentary security of the samples just after thawing. Results obtained were positive demonstrating microbiological security of the ready-to-eat prepared meal in this time point.
- Day 6. Analysis of sample 2 after 6 days of maintenance of the samples under refrigeration (4°C) to determinate the evolution of the common markers; microbiological, moulds, yeasts and alimentary security. Results obtained were positive demonstrating microbiological security of the ready-to-eat prepared meal in this time point.
- Day 12. Analysis of sample 3 after 12 days of maintenance of the samples under refrigeration (4°C) to determinate the evolution of the common markers; microbiological, moulds, yeasts, alimentary security. Results obtained appear summarized in table 13.

**Table 13. Results obtained for the microbiological analysis of Catalan pot of example 3 obtained in accordance with a process of the present invention after thawing and keeping the meal for 12 days under refrigeration (4°C). CFU: colony forming unit.**

| **Determination** | **Result** |
|---|---|
| Microorganism recount at 30°C. Plate detection and counting of aerobic microorganisms at 30 °C (UNE-EN ISO 4833-1:2014). | 1.5×10² (CFU/g) |
| Recount coliforms at 37°C. Plate detection and counting of total coliforms (ISO 4832:2006). | < 10 CFU/g |
| Investigation of *Escherichia coli* (method based in ISO 16649). | Absence in 1 g |
| Investigation of *Salmonella* spp | Absence in 25 g |
| Recount *Staphylococcus* coagulase positive at 37 °C. Plate detection and counting of staphylococcus coagulase positive (ISO 6888-2:1999/A1:2003). | < 10 CFU/g |
| Investigation of *Listeria monocytogenes* and *Listeria spp.* | Absence in 25 g |
| Recount *Lactobacillus* (method based in ISO 15214). | < 10 CFU/g |
| Recount Moulds (method based in ISO 21527). | < 50 CFU/g |
| Recount yeasts (method based in ISO 21527). | < 50 CFU/g |

These results on microbiological criterion for ready-to-eat foods are in whole compliance with microbiological criteria described at the European Commission regulation (EU) No 2073/2005 of 15^{th} November 2005 on microbiological criteria for foodstuffs, and its latest amending regulation (EC) 2019/229 of February 2019.

### Nutritional analysis:

Samples of Catalan pot were prepared in accordance with the above process and kept frozen for a long time (more than 90 days at -21°C). Afterwards samples were thawed and kept under refrigeration (4°C). Samples were analysed for their nutritional content at days 0 (just after thawing the sample) and 12 after thawing (keeping the Catalan pot at 4°C after thawing).

Results obtained appear summarized in table 14.

**Table 14. Results obtained for the nutritional content of Catalan pot of example 3 obtained in accordance with a process of the present invention 0 and 12 days after thawing (keeping the Catalan pot at 4°C after thawing). All % noted within table 14, except humidity, refer to: quantity of the determined value with regard to the total quantity of the product; or in the case of the analysed fatty acids (and sums thereof) to the quantity of the determined value with regard to the total quantity of fats in the product.**

| **Determined value** | **Day 0** | **Day 12** |
|---|---|---|
| Humidity (Humidity or the quantity of water is calculated subjecting the product to oven drying at 103°C for a determined time depending on the product (from 3 to 6h) and weighing the product before and after. The water content of the sample is calculated by weight difference and is expressed as humidity % (g of water / 100 g of sample)) | 71.11% | 70.47% |
| Crude protein (N x 6.25, crude protein is calculated by multiplying total nitrogen (analyzed) by 6.25) | 9.95% | 8.94% |
| Fat (analysed by means of hydrolysis) | 4.23% | 4.55% |
| Carbohydrates | 13.31% | 14.78% |
| Total ashes (obtained subjecting the product to a temperature of 550°C) | 1.40% | 1.26% |
| Energy | 131 kcal/100g | 136 kcal/100g |
| Energy | 552 kJ/100g | 572 kJ/100g |
| Total sugars (glucose) | 0.73% | 1.18% |
| Salt (NaCl) | 0.89% | 0.80% |
| pH | 5.99 | 6.08 |
| Water activity (Aw) | 0.930 | 0.924 |
| C(4:0) Butyric | <0.01% | <0.01% |
| C(6:0) Caproic | <0.01% | <0.01% |
| C(8:0) Caprylic | <0.01% | <0.01% |
| C(10:0) Capric | <0.01% | <0.01% |
| C(12:0) Lauric | <0.01% | <0.01% |
| C(12:1) Lauroleic | <0.01% | <0.01% |
| C(14:0) Myristic | 2.57% | 2.05% |
| C(14:1) Myristoleic | 0.88% | 0.67% |
| C(15:0) Pentadecanoic | 0.38% | 0.30% |
| C(16:0) Palmitic | 23.31% | 21.97% |
| C(16:1) Palmitoleic | 4.01% | 3.27% |
| C(17:0) Margaric | 0.88% | 0.65% |
| C(16:2) Hexadecadienoic | <0.01% | <0.01% |
| C(17:1) Margaroleic | 0.70% | 0.59% |
| C(18:0) Stearic | 11.48% | 10.97% |
| C(18:1) Oleic | 45.14% | 47.58% |
| C(18:2) Linoleic | 9.81% | 10.92% |
| C(18:3) Linolenic | 0.33% | 0.40% |
| C(20:0) Arachidic | 0.16% | 0.21% |
| C(20:1) Gadoleic | <0.01% | <0.01% |
| C(20:2) Eicosadienoic | 0.35% | 0.42% |
| C(20:4) Arachidonic | <0.01% | <0.01% |
| C(20:5) Eicosapentanoic (EPA) | <0.01% | <0.01% |
| C(22) Behenic | <0.01% | <0.01% |
| C(22) Sum of the unsaturated C22 | <0.01% | <0.01 % |
| C(22:5) Docosapentanoic (DPA) | <0.01% | <0.01 % |
| C(22:6) Docosahexanoic (DHA) | <0.01% | <0.01% |
| C(24) Lignoceric | <0.01% | <0.01% |
| C(24) Sum of unsaturated C24 | <0.01% | <0.01% |
| Sum of saturated fatty acids | 38.78% | 36.15% |
| Sum of monounsaturated fatty acids | 50.73% | 52.11% |
| Sum of polyunsaturated fatty acids | 10.49% | 11.74% |

As can be directly derived from the results shown in table 14, there was no significant difference between the nutritional content results obtained at days 0 and 12 after thawing and all the values obtained were acceptable.

### Organoleptic analysis:

Samples of Catalan pot were prepared in accordance with the above process and kept frozen for a long time (more than 90 days at -21°C). Afterwards samples were thawed and kept under refrigeration (4°C). Samples were analysed for their organoleptic features at days 0 (just after thawing the sample) and 12 after thawing (keeping the Catalan pot at 4°C after thawing) by a tasting panel of 6 members. Results were satisfactory both for day 0 and for day 12 after thawing. In addition, no significant difference was seen in the organoleptic features between day 0 and day 12 after thawing.

The results included in tables 13 and 14 and in the organoleptic analysis show that the frozen ready-to-eat prepared meals obtained in accordance with the present invention (as exemplified in this example by means of Catalan pot), are able to be kept long periods of time in frozen conditions (more than 90 days) and afterwards, also long periods of time under refrigeration after thawing, at least 12 days, and even, more than 12 days, without microbiological contamination and without affecting the nutritional content and organoleptic features of the ready-to-eat prepared meal. These results are surprisingly better than those obtained with the frozen ready-to-eat prepared meals known or available in the state of the art which, once thawed, as already explained above, can only be kept 1 day under refrigeration.

**Example 4.** Other frozen ready-to-eat prepared meals prepared in accordance with the process of the present invention.

The following frozen ready-to-eat prepared meals were prepared in accordance with the process of the present invention:
- Turkey Tajine with gluten free cous cous, with the following ingredients: Stewed turkey, chickpeas, quinoa, millet, zucchini, eggplant, red pepper, raisins, ras el hanout (Moroccan spices and herbs blend), seawater (Marevendis Agua de Mar, Alicante, Spain).
- Ramen, with the following ingredients: Pork belly, ramen noodles, bean sprouts, Broccoli, zucchini, carrot, celery, soy sauce, dried seaweeds, seawater (Marevendis Agua de Mar, Alicante, Spain).
- Chicken and ratatouille stew, with the following ingredients: Chicken thigh, rice, tomato, zucchini, eggplant, onion, red pepper, province herbs, seawater (Marevendis Agua de Mar, Alicante, Spain).
- Chicken barbeque, with the following ingredients: chicken thigh, potatoes, sweet corn, sliced eggplant, zucchini, red pepper, barbeque spices, seawater (Marevendis Agua de Mar, Alicante, Spain).
- Beef stew in garam masala, with the following ingredients: beef, carob beans, parsnip, celeriac, rustic yellow carrot, pumpkin, Jerusalem artichoke, red onion and rustic orange carrot, garam masala, seawater (Marevendis Agua de Mar, Alicante, Spain).
- Spanish pot, with the following ingredients: beef, chicken, iberic ham, chickpeas, cabbage, carrot, noodles.
- Noodles and shrimps wok, with the following ingredients: Shrimps, noodles, broccoli, salted pepper, soy sauce, seawater (Marevendis Agua de Mar, Alicante, Spain).
- Japanese style steamed salmon, with the following ingredients: Norwegian salmon, broccoli, mushrooms, steamed rice, seawater (Marevendis Agua de Mar, Alicante, Spain).
- Steamed hake, buckwheat and vegetables, with the following ingredients: Hake, buckwheat, green beans, butterbeans, eggplant, onion, seawater (Marevendis Agua de Mar, Alicante, Spain).
- Codfish confit with almond garlic, with the following ingredients: codfish, beans, cherry tomatoes, yellow baked pepper, almonds, garlic, red pepper powder, olive oil, seawater (Marevendis Agua de Mar, Alicante, Spain).
- Hake steak ham confited, with the following ingredients: Hake, green beans, cherry tomatoes, Iberian ham, almonds, pepper powder, olive oil, seawater (Marevendis Agua de Mar, Alicante, Spain).
- Salted calamari and eggplant steak, with the following ingredients: Calamari, chickpeas, eggplant, chimichurri (Argentinian spices and herbs blend), red pepper dried flakes, thyme, oregano, dried garlic.
- Thai monkfish pot, with the following ingredients: whole monkfish tale, potato cubes, sweet corn, bean sprouts, cherry tomatoes, Satay (Thai blend) red pepper flakes, dried shrimp, peanuts, seawater (Marevendis Agua de Mar, Alicante, Spain).
- Whole vegan ramen, with the following ingredients: tofu cubes, ramen noodles, bean sprouts, Broccoli, zucchini, carrot, celery, soy sauce, dried seaweeds, seawater (Marevendis Agua de Mar, Alicante, Spain).
- Vegan tajine with gluten free cous cous, with the following ingredients: Quinoa, chickpeas, millet, zucchini, eggplant, red pepper, raisins, ras el hanout (Moroccan spices and herbs blend), seawater (Marevendis Agua de Mar, Alicante, Spain).
- Vegan stew, with the following ingredients: noodles, chickpeas, cabbage, carrot, turnip, seawater (Marevendis Agua de Mar, Alicante, Spain).
- Whole vegan rice stew, with the following ingredients: rice, red beans, cauliflower, broccoli, parsnip, celeriac, rustic yellow carrot, pumpkin, Jerusalem artichoke, red onion and rustic orange carrot, soy sauce, seawater (Marevendis Agua de Mar, Alicante, Spain).

In all cases the technical effects of the present invention were observed, this is, the frozen ready-to-eat prepared meals could be kept in freezing conditions for long periods of time and once thawed, also long periods of time under refrigeration (at least 12 days, preferably at 4°C) without microorganism contamination and maintaining the organoleptic and nutritional properties of the meals.

## Claims

1. Process for the preparation of a frozen ready-to-eat prepared meal, comprising the following steps:
a) adding all the ingredients in accordance with the alimentary composition of the frozen ready-to-eat prepared meal to be prepared to obtain an ingredient mixture.
b) vacuum sealing the ingredient mixture generated in step a).
c) cooking and pasteurizing simultaneously the vacuum sealed ingredient mixture of step b) to generate a ready-to-eat prepared meal.
d) freezing the ready-to-eat prepared meal obtained in step c) to obtain a frozen ready-to-eat prepared meal.

2. Process in accordance with claim 1, **characterized in that** in step a) at least part of the ingredients are pre-elaborated.

3. Process in accordance with claim 1 or claim 2, **characterized in that** in step a) the ingredients are placed on a CPET tray or a polypropylene EVOH tray.

4. Process in accordance with claim 3, **characterized in that** step b) is a skin pack film sealing step.

5. Process in accordance with any one of claims 1 to 4, **characterized in that** step c) is carried out by means of an autoclave.

6. Process in accordance with any one of claims 1 to 5, **characterized in that** step c) comprises the following substeps:
- a first substep of increasing the temperature while maintaining vaccum.
- a second substep in which temperature and vacuum are maintained.
- a third substep of decreasing the temperature while maintaining vacuum.

7. Process in accordance with claim 6, **characterized in that** in the first substep of step c) temperature is increased from ambient temperature to a temperature of between 60°C and 90°C and lasts for between 8 and 10 minutes.

8. Process in accordance with claim 6 or claim 7, **characterized in that** in the second substep of step c) temperature is maintained between 60°C and 90°C and lasts for at least 6 minutes.

9. Process in accordance with any one of claims 6 to 8, **characterized in that** in the third substep of step c) temperature is decreased to a temperature between 40 and 50°C and lasts for between 1 and 30 minutes

10. Process in accordance with any one of claims 1 to 9, **characterized in that** in step d) temperature is decreased to -20°C or less in less than two hours.

11. Process in accordance with any one of claims 1 to 10, **characterized in that** in step d) temperature is decreased to -25°C in less than two hours.

12. Process in accordance with any one of claims 1 to 11, **characterized in that** the frozen ready-to-eat prepared meal is Turkey Tajine with gluten free cous cous; Ramen; Chicken and ratatouille stew; Chicken barbeque; Beef stew; Beef stew in garam masala; Spanish pot; Catalan pot; Noodles and shrimps wok; Japanese style steamed salmon; Steamed hake, buckwheat and vegetables; Cod confit with almond garlic; Codfish rice; Hake steak ham confited; Salted calamari and eggplant steak; Thai monkfish pot; Whole vegan ramen; Vegan tajine with gluten free cous cous; Vegan stew; or Whole vegan rice stew.

13. Frozen ready-to-eat prepared meal prepared in accordance with the process of any of claims 1 to 12.

14. Process for the preparation of a thawed ready-to-eat prepared meal, comprising the following steps:
a) adding all the ingredients in accordance with the alimentary composition of the thawed ready-to-eat prepared meal to be prepared to obtain an ingredient mixture.
b) vacuum sealing the ingredient mixture generated in step a).
c) cooking and pasteurizing simultaneously the vacuum sealed ingredient mixture of step b) to generate a ready-to-eat prepared meal.
d) freezing the ready-to-eat prepared meal obtained in step c) to obtain a frozen ready-to-eat prepared meal.
e) thawing the frozen ready-to-eat prepared meal obtained in step d), to obtain a thawed ready-to-eat prepared meal.

15. Thawed ready-to-eat prepared meal prepared in accordance with the process of claim 14.
